# EUROPEAN PATENT SPECIFICATION

(11) **EP 1 567 970 B1**
(45) Date of publication and mention of the grant of the patent: **22.11.2017**
(21) Application number: 03777487.4
(22) Date of filing: 28.11.2003
(51) Int. Cl.: G08B 13/196, H04N 7/18

(54) **SYSTEM FOR PROCESSING VISUAL INFORMATION AND METHOD OF VISUAL SURVEILLANCE**
BEARBEITIUNGSSYSTEM FÜR VISUELLE INFORMATION UND BILDÜBERWACHUNGSMETHODE
SYSTÈME DE TRAITEMENT D'INFORMATIONS VISUELLES ET PROCÉDÉ DE SURVEILLANCE VISUELLE

(30) Priority: 29.11.2002 NL 1022036
(43) Date of publication of application: 31.08.2005
(73) Proprietor: VCS International B.V., 5145 NJ Waalwijk (NL)
(72) Inventor: VAN DEIJZEN, Wilhelmus Petrus Arnoldus, 5143 GT Waalwijk (NL)
(74) Representative: Patentwerk B.V.
(86) International application number: PCT/NL2003/000839
(87) International publication number: WO 2004/055716

(56) References cited:
- WO-A-02/48971
- WO-A-97/40624
- WO-A-98/25229

## Description

The invention relates to a system for processing visual information, according the preamble of claim 1. The invention also relates to a method of visual surveillance.

The application of cameras for recording visual information is generally known. The use of camera surveillance has expanded enormously in recent times in order to allay a sense of insecurity and to increase safety. Use is generally made for this purpose of a number of different cameras, the images from which are transmitted to a central communications room. In the communications room the operator (security guard) normally views some of the provided images. Disclosure of such (surveillance) system can be found in WO 97/40624. Such systems are applied in city centres, industrial estates, stadiums and so on. The investment for setting up and keeping said camera systems operational is very considerable. It is necessary to take into consideration here infrastructural investment (cameras, connections, processing equipment) and staff (salary costs, training courses). The improvements in existing systems are sought in the prior art mainly in the improvement in the infrastructural means. However, applicant has had as insight that a very significant limitation of the existing systems is rather to be found in the "human factor".

The invention therefore has for its object to provide an improved system for processing visual information and to a method of visual monitoring with which particularly the behaviour of an operator of a surveillance system can be improved.

The invention provides for this purpose a system for processing visual information, according claim 1. With such a system the behaviour of an operator also falls within the system limits. The behaviour of the operator hereby becomes measurable and thus more controllable. Now that the behaviour of the operator can also be measured and evaluated, there is the possibility of tracing, and then influencing, less favourable behaviour of operators. Owing to the possibility of monitoring the behaviour of an operator, incorrect behaviour of an operator can also be dealt with specifically. It is expected that providing the possibility of supervision of the behaviour of an operator will already have a favourable effect on behaviour. Linked storage of the displayed visual information and storage of the performed operations provides an easier coupling of operations and the images displayed as a consequence thereof. Also from a legal point of view this has the advantage that the behaviour of an operator can thus be analysed more easily. In particular circumstances it is customary that all observed visual information is stored (for instance on hard disks or tapes). The access to such records (partly because of privacy laws and the enormous quantity of records) is however often impossible or at least extremely time-consuming. This problem does not exist in the system according to the present invention. The system also enables to link the identity of an operator in simple manner to the stored operations performed with the control means and to monitor the behaviour of an operator of the system by means of detection means arranged for this purpose in the control room.

In WO 98/25229 an improved facial recognition system for security access and identification is disclosed theat requires an operator to enter a password to log into the system however such identification of the operator is not coupled with operators behaviour as disclosed in the present invention.

In an advantageous embodiment variant of the system, the control room is also provided with communication means and the storage means are adapted to store the operations performed with the communication means. The communication behaviour of an operator (for instance an emergency switch, a telephone line and so on) is thus also brought within the controllable system limits. The communication behaviour of operators can hereby also be evaluated and, in general, improved.

For a simple further processing of the information supplied to the storage means, it is advantageous if the system is also provided with a data processing unit with which statistical information is generated from the operations performed with the control means. Such statistical information can thus be generated in real time, so that a rapid feedback is also possible. The feedback can be automated when the data processing unit connects to a control module with which the information displayed in the control room is controlled. It is possible here to envisage activation (display of an image recorded with a specific camera) if this image has not been displayed for a longer period, or expressly displaying, on the basis of historical information, a camera image which has previously prompted a particular intervention (such as displaying the image of a street in an entertainment district on Saturday evening around closing time because this has resulted in police assistance of a determined high priority being called in a number of times earlier in the month). Another possibility is to cause an alarm signal to go off (for instance a light signal and/or an acoustic signal) in the control room when an operator has not performed any operations for a determined period. The system is preferably also provided with second storage means adapted to store the statistical information generated by means of the data processing unit. This information can also be recorded therewith.

The invention also provides a method of visual surveillance, as disclosed in claim 7. From the selection behaviour can then be generated statistical information which can be used to actively influence the operator. Such a method provides the advantages as already described above with reference to the device according to the present invention.

The control room for processing information recorded by the system is supplied with personal identification data. Such personal identification data can be generated by linking visual information to another information source. Such a source can for instance be a file which comes from an investigative department (linking outward appearance to an identification). Conversely, it is also possible to generate this information with the system. A stadium for instance can thus be provided with a camera which is disposed close to an entrance to the stadium and which is connected to the control room, in addition to a read device which is disposed close to an entrance to the stadium for reading a personal identification and which is connected to the control room. This provision increases the possibilities in respect of identifying people in the stadium. The linking of data can thus be made use of later when it is desired to obtain further information relating to the identity of a person observed in the complex by the camera device. It thus becomes possible to maintain order with greater efficiency (and to take preventive measures for future events) in a complex where large numbers of people are present. It is noted in respect of all (statistical) information generated by the system that this information is also highly suitable for supporting policy-related decision-making processes.

The present invention will be further elucidated on the basis of the non-limitative embodiments shown in the following figures, wherein:
figure 1 shows a schematic view of a surveillance system according to the present invention,
figure 2 shows a schematic view of an alternative embodiment variant of a surveillance system according to the present invention, and
figure 3 is a schematic view of a part of a second alternative embodiment variant of a surveillance system according to the present invention.

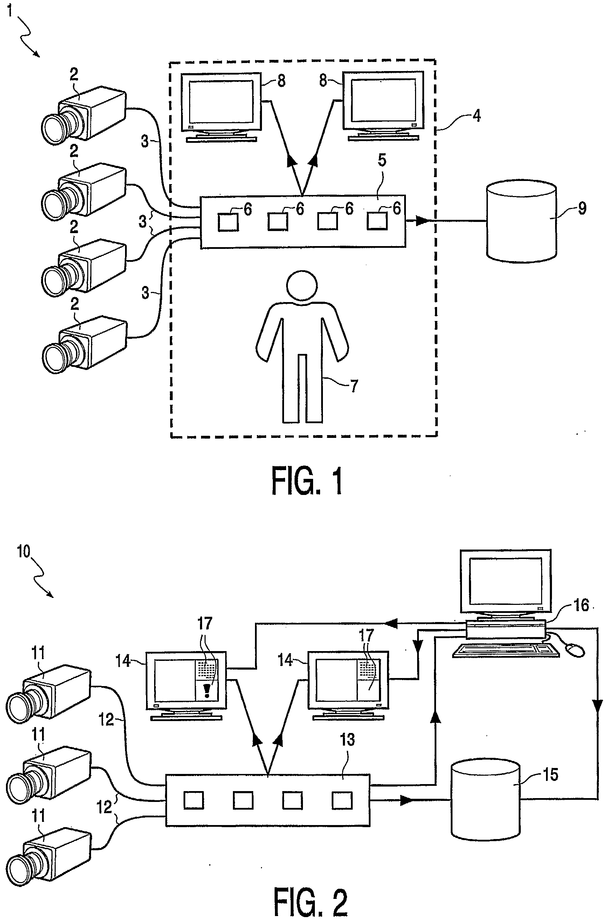

Figure 1 shows a surveillance system 1 provided with a number of cameras 2 which lead with cables 3 to a control room 4. In control room 4 the cables 3 connect to control means 5, provided schematically here with buttons 6. An observer 7 (also referred to as an operator) can determine by means of buttons 6 from which cameras 2 the images are displayed on observation monitors 8. The observation behaviour of observer 7 determines in significant part the quality of the surveillance services. This behaviour is stored in a database 9 in addition to the data relating to which buttons 6 have been operated at which moment and in which way by observer 7, and it is advantageous if the images displayed on monitors 8 as a result of these operations are also stored in database 9.

Figure 2 shows an alternative embodiment variant of a surveillance system 10 with a number of cameras 11 which are connected with cables 12 to a control panel 13. Depending on the choices made during use of control panel 13, images from several of the cameras 11 are shown on monitors 14 in selected manner (for instance zoomed-in to a greater or lesser extent). The information relating to the displayed images is also transmitted to a database 15 where it is stored. Another information flow relating to the selected images goes to a computer 16. Computer 16 processes the information flow in respect of the selected images into statistical information which is then displayed (for instance in real time) in a window 17 on monitors 14. The statistical information coming from computer 16 is also fed to database 15 for storage thereof. It is noted that the information flows as shown relate only to a randomly chosen variant. There are numerous ways of routing the information flows which are likewise possible.

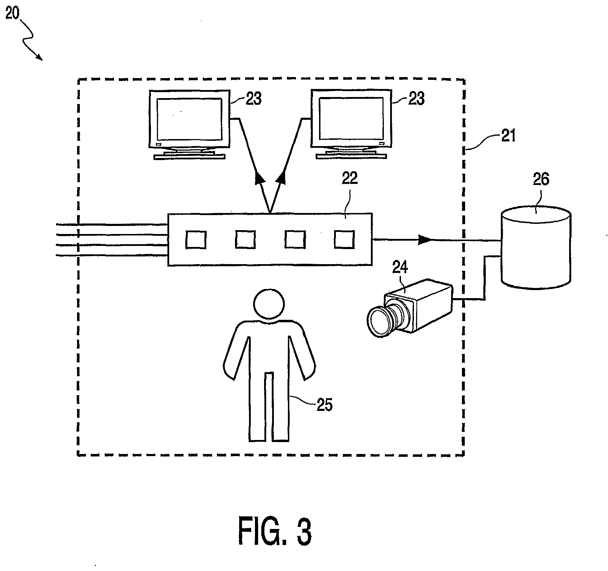

Finally, figure 3 shows a part of a second embodiment variant of a surveillance system 20 in which, in addition to a control panel 22 and monitors 23, a camera 24 is also disposed in a control room 22 with which an operator 25 is observed. The information coming from camera 24 is fed for storage thereof to a database 26 in which are also stored the data relating to use of control panel 22 and the images selected as a result thereof.

## Claims

1. System (1, 10, 20) for processing visual information, comprising:
- a number of cameras (2, 11) configured to record visual information,
- a control room (4, 21) in communication with the cameras (2, 11) and having means (8, 14, 23) for displaying recorded visual information,
- control means (5, 6, 13, 22) configured to influence by zooming and/or selecting the information displayed in the control room (4, 21), and
- storage means (9, 15, 26) configured to store the operations performed with the control means (5, 6, 13, 22),
**characterised in that** the system (1, 10, 20) also comprises:
- input means to supply to the storage means (9, 15, 26) an identification of an operator (7, 25) of the control means (5, 6, 13, 22), and
- visual detection means (24) configured to observe the behaviour of the operator (7, 25) of the control means (5, 6, 13, 22) wherein the visual detection means (24) are connected to the storage means (9, 15, 26) and are configured to store the operations performed with the control means (5, 6, 13, 22), and wherein the storage means (9, 15, 26) are configured to store the information generated with the visual detections means (24).

2. System (1, 10, 20) as claimed in claim 1, **characterized in that** the storage means (9, 15, 26) are adapted to store the operations performed with the control means (5, 6, 13, 22) in combination with at least a part of the visual information displayed as a result of the operations performed with the control means (5, 6, 13, 22).

3. System (1, 10, 20) as claimed in claim 1 or 2, **characterized in that** the control room (4, 21) is also provided with communication means and that the storage means (9, 15, 26) are adapted to store the operations performed with the communication means.

4. System (1, 10, 20) as claimed in any of the foregoing claims, **characterized in that** the system (1, 10, 20) is also provided with a data processing unit (16) with which statistical information is generated from the operations performed with the control means (5, 6, 13, 22).

5. System (1, 10, 20) as claimed in claim 4, **characterized in that** the system (1, 10, 20) is also provided with second storage means (26) adapted to store the statistical information generated by means of the data processing unit.

6. System (1, 10, 20) as claimed in claim 4 or 5, **characterized in that** the data processing unit (16) connects to a control module with which the information displayed in the control room (4, 21) is transmitted.

7. Method of visual surveillance, comprising the steps of:
A) recording visual information by means of a number of cameras (2, 11),
B) feeding the recorded information to a control room (4, 21), which control room (4, 21) is in communication with the cameras and having means (8, 14, 23) for displaying recorded visual information,
C) influencing the information with control means (5, 6, 13, 22) by selecting and/or zooming by an operator (7, 25) for observation purposes of a part of the available information from the recorded information fed to the control room (4, 21),
D) storing into storage means (9, 15, 26) the information selected by the operator (7, 25), and
E) supplying by input means to the storage means (9, 15, 26) an identification of the operator (7, 25) of the control means (5, 6, 13, 22), wherein the operator selects or zooms the part of the available information,
F) observing the behaviour of the operator (7, 25) by visual detection means, wherein the visual detection means (24) are connected to the storage means (9, 15, 26) for storing the operations performed with the control means (5, 6, 13, 22), and wherein the storage means (9, 15, 26) are configured to store the information generated with the visual detections means (24).

8. Method as claimed in claim 7, **characterized in that** statistical information is generated from the selection behaviour.

9. Method as claimed in claim 8, **characterized in that** the statistical information is used to actively influence the operator (7, 25).

10. Method as claimed in any of the claims 7-9, **characterized in that** the control room (4, 21) for processing information recorded by the system (1, 10, 20) is also supplied with personal identification data.

11. Method as claimed in claim 10, **characterized in that** the personal identification data are generated by linking visual information to another information source.

## Patentansprüche

1. System (1, 10, 20) zum Verarbeiten visueller Informationen, umfassend:
- eine Anzahl von Kameras (2, 11), die konfiguriert sind, um visuelle Informationen aufzuzeichnen,
- einen Kontrollraum (4, 21), der mit den Kameras (2, 11) in Verbindung steht und Mittel (8, 14, 23) aufweist, um aufgezeichnete visuelle Informationen anzuzeigen,
- Steuerungsmittel (5, 6, 13, 22), die konfiguriert sind, um durch Zoomen und/oder Auswählen der Informationen, die in dem Kontrollraum (4, 21) angezeigt werden, einen Einfluss auszuüben, und
- Speichermittel (9, 15, 26), die konfiguriert sind, um die Arbeitsvorgänge zu speichern, die mit den Steuerungsmitteln (5, 6, 13, 22) ausgeführt werden,
**dadurch gekennzeichnet, dass** das System (1, 10, 20) auch Folgendes umfasst:
- Eingabemittel, um den Speichermitteln (9, 15, 26) eine Identifizierung eines Bedieners (7, 25) der Steuerungsmittel (5, 6, 13, 22) zuzuführen, und
- visuelle Detektionsmittel (24), die konfiguriert sind, um das Verhalten des Bedieners (7, 25) der Steuerungsmittel (5, 6, 13, 22) zu beobachten, wobei die visuellen Detektionsmittel (24) mit den Speichermitteln (9, 15, 26) verbunden sind und konfiguriert sind, um die Arbeitsvorgänge, die mit den Steuerungsmitteln (5, 6, 13, 22) ausgeführt werden, zu speichern, und wobei die Speichermittel (9, 15, 26) konfiguriert sind, um die Informationen zu speichern, die mit den visuellen Detektionsmitteln (24) generiert werden.

2. System (1, 10, 20) nach Anspruch 1, **dadurch gekennzeichnet, dass** die Speichermittel (9, 15, 26) geeignet sind, um die Arbeitsvorgänge, die mit den Steuerungsmitteln (5, 6, 13, 22) ausgeführt werden, kombiniert mit mindestens einem Teil der visuellen Informationen, die als ein Ergebnis der Arbeitsvorgänge, die mit den Steuerungsmitteln (5, 6, 13, 22) ausgeführt werden, angezeigt werden, zu speichern.

3. System (1, 10, 20) nach Anspruch 1 oder 2, **dadurch gekennzeichnet, dass** der Kontrollraum (4, 21) auch mit Kommunikationsmitteln versehen ist, und dass die Speichermittel (9, 15, 26) geeignet sind, um die Arbeitsvorgänge, die mit den Kommunikationsmitteln ausgeführt werden, zu speichern.

4. System (1, 10, 20) nach einem der vorhergehenden Ansprüche, **dadurch gekennzeichnet, dass** das System (1, 10, 20) auch mit einer Datenverarbeitungseinheit (16) versehen ist, mit der statistische Informationen aus den Arbeitsvorgängen, die mit den Steuerungsmitteln (5, 6, 13, 22) ausgeführt werden, generiert werden.

5. System (1, 10, 20) nach Anspruch 4, **dadurch gekennzeichnet, dass** das System (1, 10, 20) auch mit zweiten Speichermitteln (26) versehen ist, die geeignet sind, um die statistischen Informationen zu speichern, die anhand der Datenverarbeitungseinheit generiert werden.

6. System (1, 10, 20) nach Anspruch 4 oder 5, **dadurch gekennzeichnet, dass** die Datenverarbeitungseinheit (16) mit einem Steuerungsmodul verbindbar ist, mit dem die Informationen gesendet werden, die in dem Kontrollraum (4, 21) angezeigt werden.

7. Verfahren zur visuellen Überwachung, die folgenden Schritte umfassend:
A) Aufzeichnen von visuellen Informationen anhand einer Anzahl von Kameras (2, 11),
B) Einspeisen der aufgezeichneten Informationen in einen Kontrollraum (4, 21), wobei der Kontrollraum (4, 21) mit den Kameras in Verbindung steht und Mittel (8, 14, 23) zum Anzeigen der aufgezeichneten visuellen Informationen aufweist,
C) Beeinflussen der Informationen mit Steuerungsmitteln (5, 6, 13, 22) durch Auswählen und/oder Zoomen durch einen Bediener (7, 25) zu Beobachtungszwecken eines Teils der verfügbaren Informationen aus den aufgezeichneten Informationen, die in den Kontrollraum (4, 21) eingespeist werden,
D) Speichern in den Speichermitteln (9, 15, 26) der Informationen, die durch den Bediener (7, 25) ausgewählt werden, und
E) Zuführen durch Eingabemittel zu den Speichermitteln (9, 15, 26) einer Identifizierung des Bedieners (7, 25) der Steuerungsmittel (5, 6, 13, 22), wobei der Bediener den Teil der verfügbaren Informationen auswählt oder zoomt,
F) Beobachten des Verhaltens des Bedieners (7, 25) durch visuelle Detektionsmittel, wobei die visuellen Detektionsmittel (24) mit den Speichermitteln (9, 15, 26) verbunden sind, um die Arbeitsvorgänge, die mit den Steuerungsmitteln (5, 6, 13, 22) ausgeführt werden, zu speichern, und wobei die Speichermittel (9, 15, 26) konfiguriert sind, um die Informationen, die mit den visuellen Detektionsmitteln (24) generiert werden, zu speichern.

8. Verfahren nach Anspruch 7, **dadurch gekennzeichnet, dass** statistische Informationen aus dem Auswahlverhalten generiert werden.

9. Verfahren nach Anspruch 8, **dadurch gekennzeichnet, dass** die statistischen Informationen verwendet werden, um den Bediener (7, 25) aktiv zu beeinflussen.

10. Verfahren nach einem der Ansprüche 7 - 9, **dadurch gekennzeichnet, dass** dem Kontrollraum (4, 21) zum Verarbeiten von Informationen, die durch das System (1, 10, 20) aufgezeichnet werden, auch persönliche Identifizierungsdaten zugeführt werden.

11. Verfahren nach Anspruch 10, **dadurch gekennzeichnet, dass** die persönlichen Identifizierungsdaten durch Verknüpfen der visuellen Informationen mit einer anderen Informationsquelle generiert werden.

## Revendications

1. Système (1, 10, 20) pour traiter des informations visuelles, comprenant :
- un certain nombre de caméras (2, 11) configurées pour enregistrer des informations visuelles,
- une salle de commande (4, 21) en communication avec les caméras (2, 11) et comprenant des moyens (8, 14, 23) permettant d'afficher des informations visuelles enregistrées,
- des moyens de commande (5, 6, 13, 22) configurés pour avoir une influence par zoomage et/ou sélection sur des informations affichées dans la salle de commande (4, 21) et
- des moyens de stockage (9, 15, 26) configurés pour stocker les opérations réalisées avec les moyens de commande (5, 6, 13, 22),
**caractérisé en ce que** le système (1, 10, 20) comprend également :
- des moyens d'entrée pour fournir aux moyens de stockage (9, 15, 26) une identification d'un opérateur (7, 25) des moyens de commande (5, 6, 13, 22) et
- des moyens de détection visuelle (24) configurés pour observer le comportement de l'opérateur (7, 25) des moyens de commande (5, 6, 13, 22), dans lequel les moyens de détection visuelle (24) sont raccordés aux moyens de stockage (9, 15, 26) et sont configurés pour stocker les opérations réalisées avec les moyens de commande (5, 6, 13, 22) et dans lequel les moyens de stockage (9, 15, 26) sont configurés pour stocker les informations générées avec les moyens de détection visuelle (24).

2. Système (1, 10, 20) selon la revendication 1, **caractérisé en ce que** les moyens de stockage (9, 15, 26) sont conçus pour stocker les opérations réalisées avec les moyens de commande (5, 6, 13, 22) en combinaison avec au moins une partie des informations visuelles affichées à la suite des opérations réalisées avec les moyens de commande (5, 6, 13, 22).

3. Système (1, 10, 20) selon la revendication 1 ou 2, **caractérisé en ce que** la salle de commande (4, 21) comporte également des moyens de communication et que les moyens de stockage (9, 15, 26) sont conçus pour stocker les opérations réalisées avec les moyens de communication.

4. Système (1, 10, 20) selon l'une quelconque des revendications précédentes, **caractérisé en ce que** le système (1, 10, 20) comporte également une unité de traitement de données (16) avec laquelle des informations statistiques sont générées à partir des opérations réalisées avec les moyens de commande (5, 6, 13, 22).

5. Système (1, 10, 20) selon la revendication 4, **caractérisé en ce que** le système (1, 10, 20) comporte également des seconds moyens de stockage (26) conçus pour stocker les informations statistiques générées au moyen de l'unité de traitement de données.

6. Système (1, 10, 20) selon la revendication 4 ou 5, **caractérisé en ce que** l'unité de traitement de données (16) est raccordé à un module de commande avec lequel les informations affichées dans la salle de commande (4, 21) sont transmises.

7. Procédé de surveillance visuelle, comprenant les étapes consistant à :
A) enregistrer des informations visuelles au moyen d'un certain nombre de caméras (2, 11),
B) transmettre les informations enregistrées à une salle de commande (4, 21), laquelle salle de commande (4, 21) est en communication avec les caméras et comporte des moyens (8, 14, 23) permettant d'afficher des informations visuelles enregistrées,
C) avoir une influence sur les informations avec des moyens de commande (5, 6, 13, 22) par sélection et/ou zoomage par un opérateur (7, 25) à des fins d'observation d'une partie des informations disponibles parmi les informations enregistrées transmises à la salle de commande (4, 21),
D) stocker dans des moyens de stockage (9, 15, 26) les informations sélectionnées par l'opérateur (7, 25) et
E) fournir par des moyens d'entrée aux moyens de stockage (9, 15, 26) une identification de l'opérateur (7, 25) des moyens de commande (5, 6, 13, 22), dans lequel l'opérateur sélectionne ou zoome la partie des informations disponibles,
F) observer le comportement de l'opérateur (7, 25) par le biais des moyens de détection visuelle, dans lequel les moyens de détection visuelle (24) sont raccordés aux moyens de stockage (9, 15, 26) pour stocker les opérations réalisées avec les moyens de commande (5, 6, 13, 22) et dans lequel les moyens de stockage (9, 15, 26) sont configurés pour stocker les informations générées avec les moyens de détection visuelle (24).

8. Procédé selon la revendication 7, **caractérisé en ce que** des informations statistiques sont générées à partir du comportement de sélection.

9. Procédé selon la revendication 8, **caractérisé en ce que** les informations statistiques sont utilisées pour influencer activement l'opérateur (7, 25).

10. Procédé selon l'une quelconque des revendications 7 à 9, **caractérisé en ce que** la salle de commande (4, 21) pour traiter des informations enregistrées par le système (1, 10, 20) reçoit également des données d'identification personnelle.

11. Procédé selon la revendication 10, **caractérisé en ce que** les données d'identification personnelle sont générées en associant des informations visuelles à une autre source d'informations.
